(19) Europäisches Patentamt

European Patent Office

Office européen des brevets

(11) **EP 1 612 061 A1**

(12) **DEMANDE DE BREVET EUROPEEN**

(43) Date de publication:
**04.01.2006 Bulletin 2006/01**

(51) Int Cl.:
**B60C 23/06** (2006.01)

(21) Numéro de dépôt: **05300502.1**

(22) Date de dépôt: **22.06.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **30.06.2004 FR 0407224**

(71) Demandeur: **Peugeot Citroen Automobiles SA 78943 Vélizy-Villacoublay Cedex (FR)**

(72) Inventeur: **Le Mens, Patrick 91460, MARCOUSSIS (FR)**

(74) Mandataire: **Fernandez, Francis Lionel Peugeot Citroen Automobiles SA Route de Gisy 78140 Velizy-Villacoublay (FR)**

(54) **Méthode de détection d'une anomalie de pression sur au moins un pneumatique d'un vehicule automobile**

(57) L'invention concerne une méthode de détection d'une anomalie de pression sur au moins un pneumatique d'un véhicule automobile.

Selon l'invention, la méthode comprend les étapes suivantes :

1/ Acquisition pour chaque roue (11, 12, 13, 14) de la valeur d'un paramètre représentatif de l'effort vertical (F1, F2, F3, F4) subi par ladite roue,

2/ Evaluation de la valeur d'un indicateur (Indic1) représentatif de la différence entre les efforts verticaux (F1, F2, F3, F4) subis par les roues situées selon une première diagonale et les efforts verticaux subis par les roues situées selon une seconde diagonale croisant la première,

3/ Détection d'une éventuelle anomalie de pression sur au moins un pneumatique d'une des roues (11, 12, 13, 14) en fonction de la valeur de l'indicateur (Indic1).

Fig. 2

EP 1 612 061 A1

## Description

L'invention concerne en général la sécurité des véhicules automobiles et la détection des dysfonctionnements à bord de ces véhicules.

Plus précisément, l'invention concerne selon un premier aspect une méthode de détection d'une anomalie de pression sur au moins un pneumatique d'un véhicule automobile pourvu d'au moins une roue à l'avant gauche et droit et à l'arrière gauche et droit.

Des méthodes d'évaluation de la pression des pneumatiques sont connues de l'art antérieur, notamment par mesures directes, ou par mesures indirectes à l'aide du dispositif antiblocage de roues dit « ABS ».

La mesure directe repose sur l'utilisation de capteurs disposés directement dans le pneumatique et communiquant par ondes avec un récepteur disposé à bord du véhicule.

Elle est coûteuse et peu fiable, et entraîne l'apparition de fausses alertes.

La méthode indirecte repose sur la détection de la variation de la circonférence de roulement du pneu, et donc de la vitesse de rotation de la roue, avec la pression du pneumatique.

Cette méthode est complexe et difficile à mettre au point car de nombreux paramètres doivent être pris en compte selon le type de pneu et le type de véhicule, notamment la charge. Par ailleurs, cette méthode n'est applicable que dans certaines conditions de conduite, quand l'adhérence de la roue sur le sol est bonne.

Dans ce contexte, la présente invention a pour but de pallier les défauts mentionnés ci-dessus.

A cette fin, la méthode de l'invention, par ailleurs conforme à la définition générique qu'en donne le préambule ci-dessus, est essentiellement caractérisée en ce qu'elle comprend les étapes suivantes :

1/ Acquisition de la valeur d'un paramètre représentatif de l'effort vertical subi par la ou les roues avant gauche et droite et arrière gauche et droite,

2/ Evaluation de la valeur d'un indicateur en fonction des valeurs des paramètres acquises à l'étape 1/, cet indicateur étant représentatif de la différence entre les efforts verticaux subis par les roues situées selon une première diagonale et les efforts verticaux subis par les roues situées selon une seconde diagonale croisant la première,

3/ Détection d'une éventuelle anomalie de pression sur au moins un pneumatique d'une des roues en fonction de la valeur de l'indicateur évaluée à l'étape 2/.

La méthode peut avantageusement présenter une ou plusieurs des caractéristiques ci-dessous.

- Le paramètre représentatif de l'effort vertical subi par la ou les roues est choisi parmi l'accélération verticale au centre de roue, la vitesse verticale au centre de roue, la vitesse verticale de la caisse au niveau de la roue, la vitesse verticale relative caisse-roue, la position verticale du centre de roue, la position verticale de la caisse au niveau de la roue , l'écartement vertical entre la caisse et la roue, et l'effort vertical entre la caisse et la roue.
- Le paramètre représentatif de l'effort vertical subi par la ou les roues est acquis à l'aide d'un capteur de jauge de contrainte.
- Le capteur de jauge de contrainte est interposé entre un élément supportant la roue et la caisse.
- La méthode comprend une étape 1'/ d'évaluation des efforts verticaux (F1, F2, F3, F4) subis respectivement par la ou les roues avant gauche et droite et par la ou les roues arrière gauche et droite en fonction des valeurs des paramètres acquises à l'étape 1/.
- L'indicateur (Indic1) est calculé en utilisant l'une des formules suivantes :

$$\text{Indic1} = (F1 + F4) - (F2 + F3)$$

ou

$$\text{Indic1} = (F2 + F3) - (F1 + F4)$$

- L'alerte est déclenchée à l'étape 3/ quand la valeur absolue de l'indicateur dépasse un seuil prédéterminé correspondant à une perte de pression d'au moins 0,5 bar dans un des pneumatiques.
- Ledit seuil est déterminé par calcul et/ou par des essais.

Selon un second aspect, l'invention concerne un véhicule automobile pourvu d'au moins une roue à l' avant gauche et droit, d'au moins une roue à l'arrière gauche et droit, et de moyens pour mettre à l'oeuvre la méthode décrite ci-dessus, ces moyens comprenant des moyens d'acquisition de la valeur d'un paramètre représentatif de l'effort vertical subi par la ou les roues avant gauche et droite et arrière gauche et droite, des moyens d'évaluation de la valeur d'un indicateur en fonction des valeurs desdits paramètres acquises, et des moyens de détection d'une éventuelle anomalie de pression sur au moins un pneumatique d'une des roues en fonction de la valeur de l'indicateur, cet indicateur étant représentatif de la différence entre les efforts verticaux subis par les roues situées selon une première diagonale et les efforts verticaux subis par les roues situées selon une seconde diagonale croisant la première.

De préférence, les moyens pour acquérir le paramètre représentatif de l'effort vertical subi par la ou les roues est un capteur de jauge de contrainte.

D'autres caractéristiques et avantages de l'invention ressortiront clairement de la description qui en est faite ci-dessous, à titre indicatif et nullement limitatif, en référence aux figures annexées, parmi lesquelles :

- la figure 1 est une représentation schématique, de côté, d'un véhicule auquel est appliquée la méthode selon l'invention,
- la figure 2 est une représentation schématique d'une roue du véhicule de la figure 1 et de sa suspension sur laquelle est monté un capteur de jauge de contrainte, et
- la figure 3 est une représentation graphique montrant la forme de la courbe représentant l'évolution du signal recueilli par le capteur de jauge de contrainte de la figure 2 en fonction de l'effort vertical appliqué à la roue correspondante.

La méthode de détection s'applique à un véhicule automobile pourvu d'une caisse 15, de roues avant gauche et droite 11 et 12 et de roues arrière gauche et droite 13 et 14, ces roues étant liées chacune par l'intermédiaire d'un dispositif de suspension 16 en un point C de la caisse 15 situé au voisinage de la roue.

Quand le véhicule roule sur le sol, les roues 11 à 14 subissent des efforts verticaux F1 à F4 au contact du sol, ces efforts étant fonction entre autres de la masse du véhicule reposant sur la roue et du profil du sol. Ces efforts sont transmis à la caisse 15 par la suspension 16, après amortissement partiel.

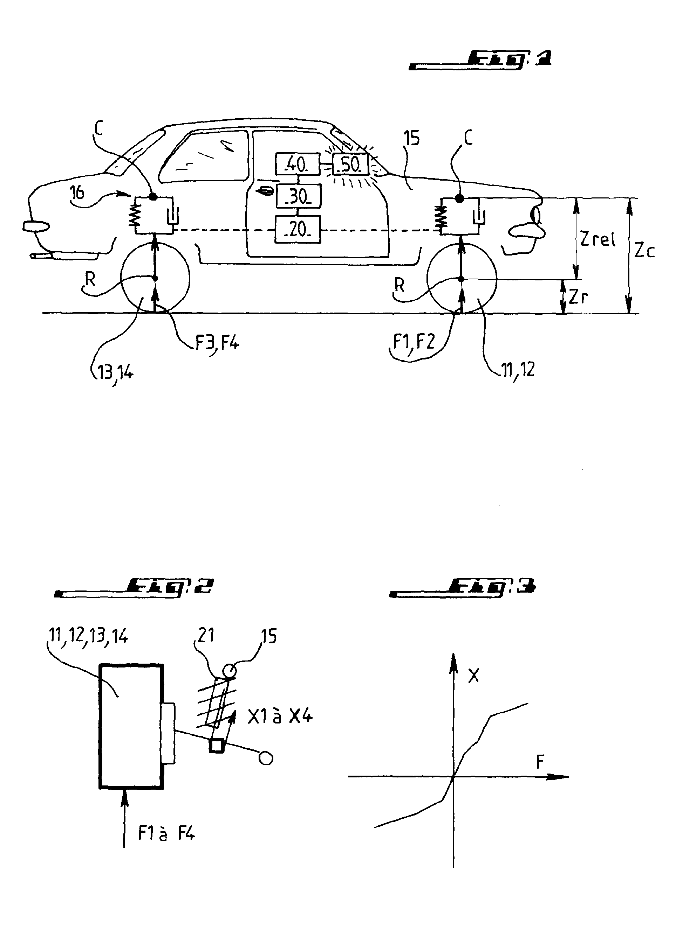

Sous l'effet de cet effort vertical, le centre R de chaque roue et le point C de la caisse 15 correspondant se déplacent verticalement. Comme le montre la figure 1, on note Zr l'altitude du centre de roue au-dessus du sol, Zc l'altitude du point C de la caisse au-dessus du sol, Zrel l'écartement vertical entre le centre de roue R et le point C, Vr la vitesse verticale du centre de roue R, Vc la vitesse verticale du point C de la caisse, Vrel la vitesse verticale relative de la caisse par rapport à la roue, Ar l'accélération verticale au centre de roue R, Ac l'accélération verticale de la caisse au point C, et Frel l'effort vertical s'exerçant entre la caisse et la roue.

Ces différentes grandeurs évoluent en fonction de l'effort vertical appliqué par le sol à la roue, et en fonction de caractéristiques intrinsèques du véhicule, notamment de la raideur et du coefficient d'amortissement de la suspension liant la roue à la caisse.

Inversement, il est possible de déterminer l'évolution de l'effort vertical appliqué par le sol sur la roue à partir de la mesure d'une des grandeurs mentionnées ci-dessus, par des moyens connus de l'art antérieur qui ne seront pas décrits en détails ici.

Ces grandeurs peuvent donc être considérées comme représentatives de l'effort vertical appliqué par le sol sur la roue.

Dans la suite du texte, on notera F1, F2, F3, F4 respectivement les efforts verticaux appliqués par le sol respectivement sur les roues avant gauche et droite 11 et 12 et sur les roues arrière gauche et droite 13 et 14.

L'invention repose sur l'observation que, dans une situation nominale où le véhicule est parfaitement équilibré, l'effort vertical sur la roue avant gauche 11 est égal à l'effort vertical sur la roue avant droite 12 (F1 = F2), et l'effort vertical sur la roue arrière gauche 13 est égal à l'effort vertical sur la roue arrière droite 14 (F3 = F4).

De plus, on observe que la masse totale du véhicule, la position du centre de gravité, l'empattement et la voie du véhicule sont indépendants de l'état de gonflage des pneumatiques.

Il en découle que la somme des efforts du sol sur les quatre roues et la répartition avant / arrière des efforts sont indépendantes du gonflage des pneumatiques (F1 + F2 + F3 + F4 = Constante ; (F1 + F2) / (F3 + F4) = Constante).

En revanche, si un pneumatique avant subit une diminution de pression, la répartition des efforts entre les deux pneumatiques avant est modifiée. Le pneumatique dégonflé est soumis à un effort plus faible, et l'autre pneumatique avant à un effort plus élevé. La diminution de l'effort appliqué au pneumatique dégonflé est pratiquement égale à l'augmentation de l'effort appliqué à l'autre pneumatique, et ce du fait de la conservation de la somme totale des efforts et de la répartition avant/arrière évoquée ci-dessus.

Parallèlement, la répartition des efforts appliqués aux deux pneumatiques arrière est également modifiée, le pneumatique arrière situé du côté du pneumatique dégonflé subissant un effort plus élevé, et le pneumatique arrière opposé un effort moins élevé.

L'effort transféré d'un pneumatique arrière à l'autre est sensiblement égal à l'effort transféré du pneumatique avant dégonflé à l'autre pneumatique avant.

Ainsi, on aura en conditions nominales, c'est-à-dire dans la situation où tous les pneumatiques sont gonflés normalement :

$$F1 = F2 = K$$

$$F3 = F4 = K'$$

Sur perte de pression du pneumatique de la roue avant gauche, les efforts vont varier de la façon suivante :

$$F1 = K - f, \ F2 = K + f$$

$$F3 = K' + f, \ F4 = K' - f$$

On observe donc que le véhicule est maintenant supporté par les pneumatiques de la diagonale arrière gauche / avant droit.

Si la perte de pression se produit sur un pneumatique arrière, les mêmes phénomènes se produisent. Une partie de l'effort appliqué au pneumatique arrière dégonflé est transférée à l'autre pneumatique arrière. Parallèlement, on observe un transfert d'une partie de l'effort appliqué au pneumatique avant situé du côté opposé au pneumatique arrière dégonflé, vers l'autre pneumatique avant.

L'effort transféré d'un pneumatique avant à l'autre est sensiblement égal à l'effort transféré du pneumatique arrière dégonflé à l'autre pneumatique arrière.

Les observations décrites ci-dessus servent de fondement à la méthode de détection de perte de pression de l'invention.

Celle-ci comprend principalement les étapes suivantes.

1/ Acquisition pour chaque roue 11 à 14 de la valeur d'un paramètre représentatif de l'effort vertical F1 à F4 subi par ladite roue,

2/ Evaluation de la valeur d'un indicateur Indic1 en fonction des valeurs des paramètres acquises à l'étape 1/, cet indicateur Indic1 étant représentatif de la différence entre les efforts verticaux subis par les roues situées selon une première diagonale et les efforts verticaux subis par les roues situées selon une seconde diagonale croisant la première,

3/ Détection d'une éventuelle perte de pression d'au moins un pneumatique d'une des roues 11 à 14 en fonction de la valeur de l'indicateur Indic1 évaluée à l'étape 2/.

Le paramètre représentatif de l'effort vertical subi par la roue est choisi parmi Zr l'altitude du centre de roue au-dessus du sol, Zc l'altitude du point C de la caisse au-dessus du sol, Zrel l'écartement vertical entre le centre de roue R et le point C, Vr la vitesse verticale du centre de roue R, Vc la vitesse verticale du point C de la caisse, Vrel la vitesse verticale relative de la caisse par rapport à la roue, Ar l'accélération verticale au centre de roue R, Ac l'accélération verticale de la caisse au point C, et Frel l'effort vertical s'exerçant entre la caisse et la roue.

Ce paramètre peut être acquis directement à l'aide d'un capteur embarqué, par exemple un capteur d'accélération verticale, ou un capteur d'effort interposé entre le bras de suspension sur lequel la roue est montée et la caisse.

Le paramètre peut également être calculé à partir de grandeurs disponibles à bord du véhicule, par exemple dans le calculateur pilotant le dispositif antiblocage de roues (ABS), le dispositif de correction automatique de trajectoire (ESP) ou encore le dispositif de pilotage de la suspension.

Dans un mode de réalisation préféré, le paramètre représentatif de l'effort vertical subi par la roue est acquis à l'aide d'un capteur de jauge de contrainte 21 interposé entre le bras supportant la roue et la caisse 15.

Ce capteur mesure la déformation d'une éprouvette, qui est elle-même fonction de l'effort vertical exercé entre la caisse et la roue.

L'indicateur Indic1 est calculé de préférence en utilisant au choix l'une des formules suivantes :

$$Indic1 = (F1 + F4) - (F2 + F3)$$

ou

$$Indic1 = (F2+ F3) - (F1 + F4)$$

Dans ce cas, la méthode comprend une étape 1'/d'évaluation des efforts verticaux F1 à F4 subis par les roues en fonction des valeurs des paramètres acquises à l'étape 1/. Cette étape 1'/ s'intercale entre les étapes 1/ et 2/.
Cette évaluation est effectuée par calcul ou à l'aide de cartographies du type de celle représentée sur la figure 3.
La cartographie de la figure 3 représente la valeur X mesurée par le capteur de jauge de contrainte 31 en fonction de l'effort vertical appliqué par le sol sur la roue correspondante.
On voit que cette courbe présente la forme d'un S passant par l'origine des axes, de telle sorte qu'il existe une correspondance bi-univoque entre la valeur recueillie par le capteur de jauge de contrainte 21 et l'effort vertical.
On peut donc passer très simplement de la mesure recueillie par le capteur de jauge de contrainte 21 à l'effort vertical correspondant.
On comprend bien que l'indicateur Indic 1 est nul en situation nominale, quand le véhicule est bien équilibré.
En cas de crevaison, la pression du ou des pneumatiques crevés va décroître, la valeur de l'indicateur Indic 1 étant modifiée de ce fait, pour les raisons expliquées plus haut.
Le tableau ci-dessous contient les valeurs des efforts du sol sur les quatre roues F1 à F4 et de l'indicateur Indic1, dans la situation nominale, et dans différents cas de crevaison.
Ces valeurs ont été calculées à l'aide d'un modèle mécanique du véhicule automobile, en considérant une perte de pression de 0,5 bar dans le ou les pneumatiques crevés.

| Situation | F1 | F2 | F3 | F4 | Indic1 |
|---|---|---|---|---|---|
| **Nominale** | 5225 | 5225 | 3281 | 3281 | 0 |
| **1 crevaison** | | | | | |
| Avant gauche | 5072 | 5377 | 3433 | 3128 | -610 |
| Arrière droit | 5129 | 5320 | 3376 | 3185 | -382 |
| **2 crevaisons identiques** | | | | | |
| 2 crevaisons avant | 5225 | 5225 | 3281 | 3281 | 0 |
| 2 crevaisons même côté | 5169 | 5280 | 3336 | 3225 | -222 |
| 2 crevaisons diagonales | 4983 | 5466 | 3522 | 3039 | -966 |
| 2 crevaisons arrière | 5225 | 5225 | 3281 | 3281 | 0 |
| **2 crevaisons différentes** | | | | | |
| 2 crevaisons avant | 5392 | 5057 | 3113 | 3448 | 670 |
| 2 crevaisons même côté | 5277 | 5173 | 3229 | 3333 | 208 |
| 2 crevaisons diagonales | 4886 | 5564 | 3620 | 2942 | -1356 |
| 2 crevaisons arrière | 5119 | 5330 | 3386 | 3175 | -422 |
| **3 crevaisons identiques** | | | | | |
| 1 avant, 2 arrière | 5080 | 5361 | 3425 | 3136 | -570 |
| 2 avant, 1 arrière | 5315 | 5134 | 3190 | 3371 | 362 |
| **3 crevaisons différentes** | | | | | |
| 1 avant, 2 arrière | 5019 | 5430 | 3486 | 3075 | -822 |
| 2 avant, 1 arrière | 5633 | 4816 | 2872 | 3689 | 1634 |
| **4 crevaisons identiques** | 5225 | 5225 | 3281 | 3281 | 0 |
| **4 crevaisons différentes** | 5305 | 5144 | 3200 | 3361 | 322 |

On constate donc que l'indicateur Indic1 prend des valeurs différentes de zéro dans pratiquement tous les cas de crevaisons, sauf quand on a des pertes de pression simultanées et identiques sur les deux roues avant, ou sur les deux roues arrière, ou sur les quatre roues à la fois.

En conséquence, l'alerte est déclenchée à l'étape 3/ quand la valeur absolue de l'indicateur Indic1 dépasse un seuil prédéterminé correspondant à une perte de pression fixée dans un des pneumatiques. Cette perte de pression est fixée à au moins 0,5 bar, et typiquement à 0,6 bar.

Ledit seuil est déterminé par calcul et/ou par des essais.

Dans une variante de réalisation de l'invention, l'indicateur Indic1 peut être calculée à partir non pas des efforts verticaux F1 à F4 appliqués par le sol aux quatre roues, mais à partir des valeurs X1 à X4 mesurées par les capteur de jauges de contraintes 21 respectivement des roues avant gauche et droite 11 et 12 et de roues arrière gauche et droite 13 et 14.

La formule de calcul de l'indicateur Indic1 devient alors :

$$\text{Indic1} = (X1+ X4) - (X2 + X3)$$

ou

$$\text{Indic1} = (X2+ X3) - (X1 + X4)$$

Dans ce cas, la méthode de calcul ne comprend pas l'étape 1'/ décrite plus haut. Bien entendu, le seuil de déclenchement de l'alerte est adapté à ce cas.

Dans encore une autre variante de réalisation, on peut utiliser pour le calcul de l'indicateur Indic1 les positions verticales Zc1 à Zc4 des points C de la caisse 15 auxquels sont liées respectivement les roues avant gauche et droite 11 et 12 et les roues arrière gauche et droite 13 et 14.

La formule de calcul de l'indicateur Indic1 devient alors :

$$\text{Indic1} = (Zc1+ Zc4) - (Zc2 + Zc3)$$

ou

$$\text{Indic1} = (Zc2+ Zc3) - (Zc1 + Zc4)$$

Dans ce cas, la méthode de calcul comprend une étape 1'/ consistant à évaluer la valeur de Zc en fonction de celle du paramètre représentatif mesuré. Bien entendu, le seuil de déclenchement de l'alerte est adapté à ce cas.

Les moyens pour mettre en oeuvre la méthode décrite ci-dessus à bord du véhicule automobile comprennent donc des moyens 20 d'acquisition pour chaque roue 11 à 14 de la valeur d'un paramètre représentatif de l'effort vertical subi par ladite roue, des moyens 30 d'évaluation de la valeur de l'indicateur Indic1 en fonction des valeurs desdits paramètres acquises, et des moyens 40 de détection d'une éventuelle perte de pression d'au moins un pneumatique d'une des roues 11 à 14 en fonction de la valeur de l'indicateur Indic1.

Comme on l'a vu précédemment, les moyens 20 pour acquérir le paramètre représentatif de l'effort vertical subi par la roue sont de préférence un capteur de jauge de contrainte 21 interposé entre le bras de suspension supportant la roue et la caisse.

Les moyens 30 d'évaluation de la valeur de l'indicateur Indic1 et les moyens 40 de détection d'une éventuelle perte de pression sont typiquement constitués d'un calculateur ou d'une partie de calculateur.

Le véhicule comprend généralement des moyens 50 d'alerte du conducteur d'une éventuelle perte de pression, ces moyens étant constitués d'un voyant lumineux qui s'allume quand une perte de pression est détectée, ou d'un message s'affichant sur l'écran de l'ordinateur de bord, accompagné éventuellement d'un signal ou d'un message sonore.

On comprend donc bien que la méthode ci-dessus peut être utilisée pour détecter de façon absolue une crevaison sur au moins un des quatre pneumatiques du véhicule.

Elle peut également être exploitée pour donner des informations supplémentaires au conducteur.

On peut prévoir que, en fonction du signe de l'indicateur Indic1, le conducteur soit informé de la diagonale dans laquelle se situe le pneumatique crevé (diagonale roues avant gauche/ arrière droite 11/14 ou diagonale roues avant droite/ arrière gauche 12/13).

On peut prévoir encore que, en fonction de la valeur absolue de l'indicateur Indic1, le conducteur soit informé de l'importance de la perte de pression. Toutefois, une même perte de pression dans un pneumatique avant n'entraîne pas la même variation de la valeur de l'indicateur Indic1 que la même perte de pression dans un pneumatique arrière. Ainsi, une variation donnée de la valeur de l'indicateur Indic1 peut provenir d'une perte de pression moyenne dans le pneu avant ou d'une forte perte de pression dans le pneu arrière de la même diagonale.

La méthode de l'invention permet donc de préciser au conducteur la diagonale sur laquelle se situe le pneu crevé, l'importance de la perte de pression si le pneu crevé est à l'avant et l'importance de la perte de pression si le pneu crevé est à l'arrière.

Bien entendu, ces indications ne sont pas exactes dans le cas de certaines crevaisons multiples générant des pertes de pression identiques, ces cas étant néanmoins extrêmement rares.

La méthode s'applique encore à la détection de la surpression d'un pneumatique par rapport aux autres, par exemple d'un pneumatique trop gonflé par inattention.

La méthode de l'invention présente de multiples avantages.

Elle est particulièrement simple et peu coûteuse. Elle demande au maximum l'ajout de quatre capteurs dans le but de mesurer le paramètre représentatif de l'effort vertical appliqué sur la ou les roues, par exemple des capteurs de jauges de contraintes.

Ces capteurs existent déjà sur certains véhicules, la méthode n'entraînant alors pratiquement aucun coût supplémentaire en matériel.

Elle peut également être mise en oeuvre en utilisant des données déjà disponibles à bord du véhicule. Dans ce cas encore elle n'entraîne aucun coût supplémentaire en matériel.

Elle est extrêmement fiable et ne dépend pas des conditions de roulement comme pour la méthode dite ABS.

Cette méthode est particulièrement bien adaptée à la détection de pertes de pressions lentes, entraînant une dégradation progressive des conditions de conduite.

Elle permet de détecter pratiquement tous les cas de crevaisons multiples, à l'exception des crevaisons identiques sur les deux roues avant, ou sur les deux roues arrière, ou sur les quatre roues.

**Revendications**

**1.** Méthode de détection d'une anomalie de pression sur au moins un pneumatique d'un véhicule automobile pourvu d'au moins une roue à l'avant gauche et droit (11, 12) et à l'arrière gauche et droite (13, 14), **caractérisée en ce qu'**elle comprend les étapes suivantes :

1/ Acquisition de la valeur d'un paramètre représentatif de l'effort vertical (F1, F2, F3, F4) subi par la ou les roues avant gauche et droite (11, 12) et arrière gauche et droite (13, 14),

2/ Evaluation de la valeur d'un indicateur (Indic1) en fonction des valeurs des paramètres acquises à l'étape 1/, cet indicateur (Indic1) étant représentatif de la différence entre les efforts verticaux (F1, F2, F3, F4) subis par les roues situées selon une première diagonale et les efforts verticaux subis par les roues situées selon une seconde diagonale croisant la première,

3/ Détection d'une éventuelle anomalie de pression sur au moins un pneumatique d'une des roues (11, 12, 13, 14) en fonction de la valeur de l'indicateur (Indic1) évaluée à l'étape 2/.

**2.** Méthode selon la revendication 1, **caractérisée en ce que** le paramètre représentatif de l'effort vertical subi par la ou les roues (11, 12, 13, 14) est choisi parmi l'accélération verticale au centre de roue (Ar), la vitesse verticale au centre de roue (Vr), la vitesse verticale (Vc) de la caisse (15) au niveau de la roue, la vitesse verticale relative caisse-roue (Vrel), la position verticale du centre de roue (Zr), la position verticale de la caisse (Zc) au niveau de la roue , l'écartement vertical (Zrel) entre la caisse (15) et la roue, et l'effort vertical entre la caisse et la roue (Frel).

**3.** Méthode selon la revendication 1 ou 2, **caractérisée en ce que** le paramètre représentatif de l'effort vertical subi par la ou les roues est acquis à l'aide d'un capteur de jauge de contrainte (21).

**4.** Méthode selon la revendication 3, **caractérisée en ce que** le capteur de jauge de contrainte (21) est interposé entre un élément supportant la roue (11, 12, 13, 14) et la caisse (15).

**5.** Méthode selon l'une quelconque des revendications 1 à 4, **caractérisée en ce qu'**elle comprend une étape 1'/ d'évaluation des efforts verticaux (F1, F2, F3, F4) subis respectivement par la ou les roues avant gauche et droite (11, 12) et par la ou les roues arrière gauche et droite (13, 14) en fonction des valeurs des paramètres acquises à l'étape 1/.

**6.** Méthode selon la revendication 5, **caractérisée en ce que** l'indicateur (Indic1) est calculé en utilisant l'une des formules suivantes :

$$\text{Indic1} = (F1 + F4) - (F2 + F3)$$

ou

$$\text{Indic1} = (F2 + F3) - (F1 + F4)$$

**7.** Méthode selon l'une quelconque des revendications 1 à 4, **caractérisée en ce que** l'alerte est déclenchée à l'étape 3/ quand la valeur absolue de l'indicateur (Indic1) dépasse un seuil prédéterminé correspondant à une perte de pression d'au moins 0,5 bar dans un des pneumatiques.

**8.** Méthode selon la revendication 7, **caractérisée en ce que** ledit seuil est déterminé par calcul et/ou par des essais.

**9.** Véhicule automobile pourvu d'au moins une roue à l'avant gauche et droit (11, 12), d'au moins une roue à l'arrière gauche et droit (13, 14), et de moyens pour mettre en oeuvre la méthode selon l'une quelconque des revendications 1 à 8, ces moyens comprenant des moyens (20) d'acquisition de la valeur d'un paramètre représentatif de l'effort vertical (F1, F2, F3, F4) subi par la ou les roues avant gauche et droite et arrière gauche et droite, des moyens (30) d'évaluation de la valeur d'un indicateur (Indic1) en fonction des valeurs desdits paramètres acquises, et des moyens (40) de détection d'une éventuelle anomalie de pression sur au moins un pneumatique d'une des roues en fonction de la valeur de l'indicateur (Indic1), cet indicateur (Indic1) étant représentatif de la différence entre les efforts verticaux (F1, F2, F3, F4) subis par les roues situées selon une première diagonale et les efforts verticaux subis par les roues situées selon une seconde diagonale croisant la première.

**10.** Véhicule selon la revendication 9, **caractérisé en ce que** les moyens (20) pour acquérir le paramètre représentatif de l'effort vertical subi par la ou les roues est un capteur de jauge de contrainte (21).

_Fig.1_

_Fig.2_

_Fig.3_

Office européen
des brevets

**RAPPORT DE RECHERCHE EUROPEENNE**

Numéro de la demande

EP 05 30 0502

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 694 398 A (MICHELIN ET CIE) 4 février 1994 (1994-02-04) | 1,2,5-9 | B60C23/06 |
| Y | * page 4, ligne 10 - ligne 26 * * page 7, ligne 18 - page 10, ligne 18 * ----- | 3,4,10 | |
| Y | FR 2 744 396 A (MICHELIN ET CIE) 8 août 1997 (1997-08-08) * page 6, ligne 1 - ligne 20; figure 1 * ----- | 3,4,10 | |
| A | US 6 208 243 B1 (KUTSCHER EBERHARD) 27 mars 2001 (2001-03-27) * colonne 2, ligne 50 - colonne 3, ligne 31 * ----- | 1,9 | |
| A | US 4 574 267 A (JONES ET AL) 4 mars 1986 (1986-03-04) * colonne 3, ligne 10 - ligne 20 * * colonne 9, ligne 25 - ligne 36 * ----- | 1,9 | |
| A | DE 23 41 423 A1 (DITTRICH,JOSEF,DIPL.-ING) 27 février 1975 (1975-02-27) * le document en entier * ----- | 3,4 | **DOMAINES TECHNIQUES RECHERCHES (Int.Cl.7)** B60C |

Le présent rapport a été établi pour toutes les revendications

| Lieu de la recherche | Date d'achèvement de la recherche | Examinateur |
|---|---|---|
| Munich | 13 octobre 2005 | Vessière, P |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**
EP 05 30 0502

La présente annexe indique les membres de la  famille de brevets relatifs aux documents  brevets cités dans le rapport de recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

13-10-2005

| Document brevet cité au rapport de recherche | | Date de publication | Membre(s) de la famille de brevet(s) | | Date de publication |
|---|---|---|---|---|---|
| FR 2694398 | A | 04-02-1994 | CA | 2141303 A1 | 17-02-1994 |
| | | | DE | 69301827 D1 | 18-04-1996 |
| | | | DE | 69301827 T2 | 01-08-1996 |
| | | | WO | 9403338 A1 | 17-02-1994 |
| | | | EP | 0651702 A1 | 10-05-1995 |
| | | | ES | 2086955 T3 | 01-07-1996 |
| | | | JP | 3367672 B2 | 14-01-2003 |
| | | | JP | 7509422 T | 19-10-1995 |
| | | | US | 6094978 A | 01-08-2000 |
| FR 2744396 | A | 08-08-1997 | DE | 69722978 D1 | 31-07-2003 |
| | | | DE | 69722978 T2 | 19-05-2004 |
| | | | EP | 0787605 A1 | 06-08-1997 |
| | | | ES | 2201212 T3 | 16-03-2004 |
| | | | JP | 9218122 A | 19-08-1997 |
| | | | US | 5849120 A | 15-12-1998 |
| US 6208243 | B1 | 27-03-2001 | DE | 19645897 A1 | 20-05-1998 |
| | | | FR | 2755401 A1 | 07-05-1998 |
| | | | GB | 2319107 A | 13-05-1998 |
| | | | IT | 1295844 B1 | 28-05-1999 |
| US 4574267 | A | 04-03-1986 | AUCUN | | |
| DE 2341423 | A1 | 27-02-1975 | AUCUN | | |

EPO FORM P0460

Pour tout renseignement concernant cette annexe : voir Journal Officiel de l'Office européen des  brevets, No.12/82